# EUROPÄISCHE PATENTSCHRIFT

(11) **EP 1 353 980 B1**
(45) Veröffentlichungstag und Bekanntmachung des Hinweises auf die Patenterteilung: **17.01.2007**
(21) Anmeldenummer: 01999597.6
(22) Anmeldetag: 03.12.2001
(51) Int. Cl.: C08J 9/04, C08J 9/16

(54) **SCHÜTTFÄHIGE THERMOPLASTISCHE TRÄGERPOLYMEREN MIT INTEGRIERTEN ADDITIVEN**
FLOWABLE THERMOPLASTIC CARRIER POLYMERS WITH INTEGRATED ADDITIVES
POLYMERES PORTEURS THERMOPLASTIQUES APTES A L'ECOULEMENT AVEC ADDITIFS INTEGRES

(30) Priorität: 08.12.2000 CH 239900
(43) Veröffentlichungstag der Anmeldung: 22.10.2003
(73) Patentinhaber: Brugg Kabel AG, CH-5201 Brugg AG (CH)
(72) Erfinder: FURRER, Willy, CH-1276 Gingins VD (CH); GASPARINI, Rico, CH-5000 Aarau (CH)
(74) Vertreter: Breiter, Heinz
(86) Internationale Anmeldenummer: PCT/CH2001/000694
(87) Internationale Veröffentlichungsnummer: WO 2002/046273

(56) Entgegenhaltungen:
- DE-A- 19 900 489
- GB-A- 1 590 294
- US-A- 4 331 776
- PATENT ABSTRACTS OF JAPAN vol. 005, no. 053 (M-063), 14. April 1981 (1981-04-14) & JP 56 010432 A (ACHILLES CORP), 2. Februar 1981 (1981-02-02)

## Beschreibung

Die Erfindung bezieht sich ein Verfahren zur Herstellung eines schüttfähigen, thermoplastischen Trägerpolymeren mit integrierten Additiven für die weitere Verarbeitung, insbesondere zum Vernetzen, eines ebenfalls schüttfähigen thermoplastischen Basispolymeren aus kompatiblem oder gleichem Material. Weiter betrifft die Erfindung Verwendungen des nach dem Verfahren hergestellten schüttfähigen thermoplastischen Trägerpolymeren.

Polymere bestehen aus Molekülketten mit zahlreichen, sich praktisch endlos wiederholenden Bausteinen, welche sich in bezug auf die physikalischen Eigenschaften von den niedermolekularen Verbindungen unterscheiden, beispielsweise in bezug auf ihre hohe Zugfestigkeit und Elastizität.

In polymerisierte Kunststoffmassen werden bei industriellen Verfahren, je nach Weiterverarbeitung und Zweckbestimmung, geeignete Zusatzstoffe, sogenannte Additive, eingemischt. Die Basispolymere können so an individuelle Produkte und/oder Bedürfnisse angepasst werden.

Zwischen Basispolymeren einerseits und flüssigen oder leicht schmelzbaren Additiven andrerseits besteht ein grosser Viskositätsunterschied, welcher bis zu einer Unverträglichkeit führen kann. In der Regel sind deshalb nur geringe Anteile von Additiven in Basispolymere, d.h. Massenkunststoffe, einmischbar.

Zur Vermeidung von Dosierproblemen und zum Erreichen einer homogeneren Verteilung bevorzugen viele Kunststoffverarbeiter ein Konzentrat des jeweiligen Additivs in den Basispolymeren. Dabei wird ein Basispolymer oder eine Mischung von Basispolymeren mit einem oder mehreren Additiven erwärmt, aufgeschmolzen, gemischt und in eine schüttfähige Form überführt, beispielsweise in mit Additven beladene Trägermaterialien in Granulatform. Diese werden auch Additivmasterbatches genannt.

Für poröse oder mikroporöse Polymerstrukturen sind zahlreiche Herstellungsverfahren und verschiedenste Verwendungen bekannt. Als Herstellungsbeispiele seien die Phaseninversion, ein Nuklearbeschuss zur Einlagerung mikroporöser Festteilchen und die Zusammensinterung von kleinen mikroporösen Partikeln genannt.

Aus der US-A 4247498 ist ein Verfahren bekannt, mit welchem alle beliebigen synthetischen thermoplastischen Polymeren mikroporös hergestellt werden können. Die Polymere werden in einer mit ihnen verträglichen Flüssigkeit so lange und so weit aufgeheizt, bis sich eine homogene Lösung bildet. Diese wird in die gewünschte Form gebracht, in welcher sie abgekühlt wird, bis eine thermodynamisch ungleichgewichtige Flüssig/Flüssig-Phasentrennung einsetzt. Dabei entsteht ohne Einwirkung von Misch- oder sonstigen Scherkräften ein Feststoff, welcher ohne physische Degradation gehandhabt werden kann. Abschliessend wird mindestens ein wesentlicher Teil der Flüssigkeit aus dem entstandenen Feststoff entfernt, um das gewünschte mikroporöse Polymere zu bilden. Eine eng begrenzte Verteilung der Porengrösse, wie sie durch Quecksilberintrusionsporosimetrie gemessen wird, ist von wesentlicher Bedeutung und wird analytisch mit der Schärfefunktion "S" ausgedrückt. Im Rahmen der US,A 4247498 werden Polymere mit sphärischen Poren hergestellt, welche eine funktionelle Wirkflüssigkeit, wie Polymeradditive, enthalten. Die beladenen mikroporösen Polymere verhalten sich wie Feststoffe und können als solche verarbeitet werden. Zum Chargieren der mikroporösen Polymere kann jede organische Flüssigkeit verwendet werden, welche das Polymer nicht auflöst und mit diesem verträglich ist. Die funktionellen Wirkflüssigkeiten können durch Absorption, Austauschverfahren, Infusionsverfahren oder dgl. bekannte Verfahren eingebracht werden, auch unter Verwendung eines Zwischenproduktes.

Nach der EP,A1 0657489 wird ein schüttfähiges, poröses Trägermaterial aus wenigstens einem thermoplastischen Basispolymeren mit in die poröse Struktur eingebrachten Additiven hergestellt. Zuerst werden zu den Basispolymeren geeignete Aufschäumhilfen gegeben, die Masse geschmolzen und vor und/oder nach dem Schmelzen gemischt. Dann wird die Mischung vorzugsweise extrudiert und unter Bildung eines schüttfähigen, porösen Trägermaterials abgekühlt. Das poröse Trägermaterial wird mit wenigstens einem Additiv versetzt und mit diesem bei einer unter dem Schmelzpunkt der Basispolymere, jedoch über dem Schmelzpunkt des Additivs liegenden Temperatur T_{M} gemischt. Das poröse Trägermaterial hat bevorzugt ellipsoide Poren, welche beim Extrudieren in ihre längliche Form gebracht worden sind.

Der Erfindung liegt die Aufgabe zu Grunde, ein Verfahren der eingangs genannten Art zu schaffen, welches den Kunststoffverarbeitern bei der weiteren Verarbeitung der schüttfähigen thermoplastischen Trägerpolymere eine einfache und kostengünstige Lösung für die Additivierung seiner Massenkunststoffe bietet.

In bezug auf das Verfahren wird die Aufgabe erfindungsgemäss dadurch gelöst, dass in einem ersten Schritt gleichzeitig wenigstens eine Aufschäumhilfe und wenigstens ein nur auf die Endprodukte einwirkendes Additiv zum kompakten, porenfreien Trägerpolymeren gegeben werden, diese heterogene Masse unter vorgängigem und/oder gleichzeitigem Mischen geschmolzen und aufgeschäumt wird, in einem zweiten Schritt wenigstens ein weiteres, auf die Endprodukte einwirkendes Additiv ohne vorhergehendes Abkühlen, während und/oder nach dem Schmelzen eingemischt, und beim Abkühlen aus der Masse pellet- oder granalienförmige Trägerpolymere mit einer die Additive enthaltenden porösen Struktur gebildet werden. Spezielle und weiterbildende Ausführungsformen des Verfahrens sind Gegenstand von abhängigen Patentansprüchen:

Nach einer ersten Variante werden die Additive des ersten Schrittes, in fester oder flüssiger Form, zum festen Trägerpolymeren gegeben, welches mit gleichzeitigem und/oder nachfolgendem Rühren geschmolzen wird.

Nach einer zweiten Variante werden die Additive des ersten und zweiten Schrittes zum bereits geschmolzenen Polymeren gegeben, unter gleichzeitigem und/oder nachfolgendem Mischen.

Nach einer dritten Variante werden die Additive des ersten und zweiten Schrittes während dem Schmelzen mit gleichzeitigem und/oder nachfolgendem Mischen eingebracht.

Diese drei Varianten können auch miteinander kombiniert werden, indem beispielsweise alle Additive schrittweise oder kontinuierlich zugegeben werden, mit dauerndem, zeitweisem oder nur abschliessendem Mischen. Bei allen Varianten ist von wesentlicher Bedeutung, dass die Masse zwischen der Zugabe von wenigstens einem Aufschäummittel und den übrigen Additiven nicht abgekühlt wird..

Mit anderen Worten erfolgt nach allen Varianten des erfindungsgemässen Verfahrens das erste Abkühlen nicht nach der Zugabe einer Aufschäumhilfe und vor der Zugabe der übrigen Additive, sondern erst nach der Zugabe aller Additive.

Für die als Ausgangsmaterial eingesetzten Trägerpolymere werden übliche Polymere eingesetzt, insbesondere
- ein Homopolymer aus einem α-Olefin mit 2 - 8 Kohlenstoffatomen oder ein Copolymerisat von zwei entsprechenden α-Olefinen, vorzugsweise Copolymerisate aus Ethylen, auch als Homopolymerisat niedriger (LDPE), linear niedriger (LLDPE), sehr niedriger (VLDPE), ultraniedriger (ULDPE) oder hoher Dichte (HDPE), Propylen, auch als Homopolymerisat, 1-Butylen, 1-Pentylen, 1-Hexylen, 1-Octylen, Isobutylen, 2-Methyl-1-Butylen, 3-Methyl-1-Pentylen, 4-Methyl-1-Pentylen, 2,3-Dimethyl-1-Butylen, 2-Ethyl-1-Butylen, und Mischungen davon, oder
- ein Copolymerisat von Ethylen mit 1-Butylen, 1-Hexylen, 1-Octylen oder 4-Methyl-1-Pentylen, oder
- Polypropylen als Homo- und Copolymere sowie Polypropylen-Modifikationen wie ein Ethylenpropylengummi (EPDM), auch dienmodifiziert (EPR), oder
- ein Ethylenvinylacetat-Copolymerisat (EVAC), ein Ethylenethylacetat-Copolymerisat, ein Ethylenacrylsäurecomplymerisat, ein Ethylen/Ethylacrylat (EEA), ein Ethylen/Butylacrylat (EBA) und Mischungen davon oder mit Copolymeren von Ethylen und 1-Butylen, 1-Hexylen, 1-Octylen oder 4-Methyl-1-Pentylen, oder
- Styrolpolymere wie Styrol-Homopolymere (PS), Styrol-Copolymere, wie ein Styrol-Butadien-styrol-Copolymerisat (SBS), ein Ethylen/Styrol-Copolymerisat (ESI), ein Stryol-Ethylen-Butylen-Styrol-Copolymerisat (SEBS), ein Styrol/Acrylnitrilcopolymer (SAN), ein Acrylnitril/Polybutadien/Styrolpfropfpolymer (ABS) sowie Mischungen davon mit nicht auf Olefinen basierenden Copolymeren und Polymerblends, oder
- thermoplastische Polykondensate wie ein Polyamid (PA), ein thermoplastisches Polyamidelastomer (PA-TE), thermoplastische Polyester wie ein Polycarbonat (PC), Polycarbonatblends, ein Polyethylenterephtalat (PET) ein Polybutylenterephtalat (PBT), ein thermoplastisches Polyesterelastomer (TPE), ein Naphtalat-Polyester (PEN, PBN).

In der industriellen Praxis werden aus der breiten Palette von zur Verfügung stehenden Ausgangsmaterialien für Trägermaterialien insbesondere Polyetylen mit hoher Dichte (HDPE), niedriger (LDPE) oder linear niedriger (LLDPE) Dichte, Ethylvinylacetat-Copolymerisat (EVA) geschlossen und Mischungen davon verwendet.

Es kann auch eine Mischung aus einem bei Temperaturen T_{M} bis 140°C formstabileren Polymeren und einem die Additive in der Festphase des Trägers speichernden Polymeren eingesetzt werden.

Die eingesetzten porenfreien Trägerpolymere können auch Füllstoffe enthalten, insbesondere flammhämmende Zusätze, wie beispielsweise Aluminiumtrihydrat (ATH) und/oder Magnesiumhydroxid. Diese Zusatzstoffe verleihen einem später hergestellten Massenprodukt das Prädikat von beispielsweise "schwer entflammbar".

Die Aufschäumhilfe wird vorzugsweise mit 0,1 bis 2 Gew.-%, bezogen auf die Trägerpolymere, zugegeben, gleichgültig ob die Zugabe vor oder zusammen mit den übrigen Additiven erfolgt. Die Zugabe wird zweckmässig so bemessen, dass das in der gesamten Masse erzeugte Porenvolumen vorzugsweise bei 30 bis 90 %, insbesondere bei 50 bis 70 %, bezogen auf das Gesamtvolumen, liegt.

Als Aufschäumhilfe eignen sich insbesondere Azodicarbonamide oder Zitronensäurederivate, z.B. Hydrocerol.

Die Porosität des Trägerpolymers kann weiter erhöht werden, indem wenigstens zeitweise zusätzlich ein inertes Gas in die geschmolzene Masse eingeleitet wird, beispielsweise Stickstoff. Die Menge des zweckmässig fein versprüht eingeleiteten Gases richtet sich nach weiteren Parametern, beispielsweise nach dem Trägerpolymeren, dem Anteil an Aufschäumhilfe, der Temperatur und der Gesamtmasse der Schmelze.

Die flüssigen und/oder leicht schmelzbaren weiteren Additive werden entsprechend einem Beladungsgrad von vorzugsweise 5 bis 80 Gew.-%, insbesondere 15 bis 60 Gew.%, bezogen auf die ganze Masse, bei einer Temperatur T_{M} im Bereich von 30 bis 140°C, vorzugsweise 40 bis 90°C, eingemischt.

Die im ersten Schritt zweckmässig eingesetzten weiteren Additive sind insbesondere Metalldeaktivatoren, Temperaturstabilisatoren, UV-Stabilisatioren, Stabilisatoren zur Erhöhung der Oxidationsbeständigkeit, Antistatika, Antischleiermittel, Haftmittel, Kalandrierhilfen, Formtrennmittel, Gleitmittel, Schmiermittel, Weichmacher, Duftmittel, Farbpigmente und/ oder Flammschutzmittel eingemischt werden, insbesondere wenigstens eine der Komponenten Fettalkohole, Fettsäuren, Fettsäureester, stickstoffhaltige Fettderivate, Fettsäureamide, Wachssäuren, Wachssäureester, Paraffine, Neutralwachse, Metallseifen; Säureester von Fettalkoholen, Polyolester, Fettalkohol-Fettsäureester, Fettsäureester des Glycerins, neutrale Polyolester von Fettsäuren, Fettalkohol-Dicarbonsäureester, Fettalkohol-Fettsäureester, Stearinsäure, oligomere Fettsäureester, Fettsäuremonoamide, Fettsäuediamide; neutrale Esterwachse, polare Polyethylenwachse, unpolare Polyethylenwachse; stickstoffreie nicht ionogene Verbindungen, Polyethylenglycolester, Polyethylenglycolether, Monoglyceride, Diglyceride, ethxylierte Fettamine; anionenaktive Verbindungen, Alkylsulfonate, Alkylsulfate, Alkylphosphate; kationenaktive Verbindungen, quartäre Ammoniumverbindungen und Organo-Silicone.

Die Mischung der Trägerpolymere mit Additiven, eingeschlossen wenigstens eine geeignete Aufschäumhilfe, wird bevorzugt mit einem Extruder oder mit mehrwelligen Kneter-Extrudern aufgeschmolzen. Dabei entsteht durch die Aufschäumhilfen eine poröse bis feinporöse, dreidimensionale Struktur mit entsprechend dem Mischungsgrad homogener Verteilung der Hohlräume. Die poröse Struktur ist dabei jedoch nicht mehr sphärisch, wie beispielsweise bei einem Produkt nach der US-A 4247498, sondern immer zu einer ellipsoiden Ausbildung der einzelnen Poren verformt, welche die anderen Additive enthalten. Das Verhältnis des längsten zum kürzesten Innendurchmesser liegt bei wenigstens etwa 2, insbesondere bei 3 bis 5.

Das poröse Exdrudat wird mit an sich bekannten, geeigneten Einrichtungen in granulat- oder pelletförmiges Trägermaterial überführt, beispielsweise durch Stranggranulatoren.

Das mit Additiven beladene poröse Trägermaterial, welches vorzugsweise wenigstens teilweise offenporig ausgebildet ist, wird wie erwähnt auch Additivmasterbatch genannt. Poröse Trägermaterialien mit einem hohen Beladungsgrad bezüglich der Additive sind vorteilhaft, weil sie zum Erreichen eines bestimmten Additivgehalts im zu verarbeitenden Massenkunststoff nur in geringerer Menge zugegeben werden müssen.

Die eingemischten Additive sind beispielsweise Antistatika, Antischleiermittel, Haftmittel, Kalandrierhilfen, Formtrennmittel, Gleitmittel, Schmiermittel, Weichmacher, Duftmittel und/oder Flammschutzmittel.

Für funktionsbezogen eingesetzte Additive werden folgende Beispiele erwähnt:
- Gleitmittel: Säureamide
- Gleit- und Formtrennmittel: Neutralwachse, Fettsäureester des Glycerins, Stearinsäure, neutrale Esterwachse, Fettalkohole, Säureester von Fettalkoholen, Polyolester
- Haftmittel, Antischleiermittel (Antifogs): Neutrale Polyolester von Fettsäuren
- Antistatika, Antischleiermittel: Stickstoffhaltige Fettderivate; stickstoffreie nicht ionogene Verbindungen, z.B. Polyethylenglycolester oder Polyethylenglycolether, Fettsäureester, Mono- oder Diglyceride, ethoxylierte Fettamine; anionenaktive Verbindungen, z.B. Alkylsulfonate, Alkylsulfate oder Alkylphosphate; kationenaktive Verbindungen, z.B. quartäre Ammoniumverbindungen.

Nach einer Weiterentwicklung des erfindungsgemässen Verfahrens wird im zweiten Schritt als weitere, auf die Endprodukte einwirkende Additive wenigstens ein mit dem Trägerpolymeren kompatibles, nicht leicht umsetzbares Silan eingemischt, mit der Formel

CH₂ = CR'(COO)ₓ (CₙH₂ₙ)_{y}SiR₃

worin R' Wasserstoff oder eine Methylgruppe bedeutet, x und y = 0 oder 1 sind unter der Voraussetzung, dass y 1 ist wenn x 1 ist; n eine ganze Zahl einschliesslich 1 bis 12 bedeutet; jede Gruppe R unabhängig voneinander eine hydrolysierbare organische Gruppe ist, ausgewählt aus Alkoxy, Aryloxy, Aralkyloxy, aliphatischem Acyloxy, Oximo, Alkylamino und Arylamino, oder eine niedere Alkylgruppe mit einschliesslich 1 bis 6 Kohlenstoffatomen, unter der Voraussetzung, dass nicht mehr als eine der drei R-Gruppen ein Alkyl ist.

Beispiele für eingemischte Silane sind Vinyltriethoxysilan, Viniltrimethoxysilan und Vinyltri-iso-butoxysilan.

Der Einsatz von Silanmischungen, welche beispielsweise ein Silan, ein Peroxid, einen Katalysator, Wärmestabilisatoren, UV-Stabilisatoren, Antioxydationsmittel und Metalldeaktivatoren enthalten, als Additive beeinträchtigt die Qualität der Endprodukte aus Massenkunststoffen in keiner Weise. Diese Silanmischungen führen jedoch zu einer beträchtlichen Kostenverminderung, beispielsweise bei der Produktion von vemetzten Kunststoffen, weil stabilisierte Silanmischungen weit teurer sind als hier zur Diskussion stehende nicht stabilisiert Silanmischungen.

In der Regel wird das Trägerpolymere durch das Silan leicht aufgequellt.

Vorzugsweise enthalten die Additive, welche eingemischt werden, eine Erzeugersubstanz für freie Radikale, insbesondere eine flüssige oder verflüssigbare peroxidhaltige Substanz mit einem Schmelzpunkt unterhalb der Zersetzungstemperatur, insbesondere tert. Butylcumylperoxid (BCUP); 2,5-Dimethyl-2,5-Di(tert. Butylperoxy) Hexan (DHBP); Di(tert. Butyl) Peroxid (DTBP); 2,5-Dimethyl-2,5-Di(tert. Butylperoxy) Hexin (DYBP); Dicumylperoxid (DCUP), Mischungen davon, auch mit einem Phlegmatisierungsmittel. Auch Interox TMCH-75AL, 1,1-Di(tert. Butylperoxy) 3,3,5-Trimethyl Cyclohexan, als 75 % Lösung in Aliphaten, ist eine breit anwendbare Erzeugersubstanz für Radikale, sowohl separat als auch zusammen mit den vorgenannten Substanzen.

Als weiteres Additiv kann ein flüssiges oder ein verflüssigbares Coagent eingemischt werden, insbesondere Methacrylate, Acrylate und/oder Allylverbindungen, insbesondere mit Ethylenglycol-Dimethacrylat (EDMA), Trimethylolpropantrimethacrylat (TRIM/TMPT), Butylenglycoldimethacrylat (BDMA), Trimethylolpropantriacrylat (TMPTA), Triallylcyanurat (TAC), Triallylisocyanurat (TAIC), Triallylphosphat (TAP), Triallyltrimellitat (TATM) und/oder Diallylphthalat (DAP).

Sowohl Peroxide als auch Coagentien können in einem weiten Konzentrationsbereich eingemischt werden, vorzugsweise mit einer Konzentration von je 5 bis 80 Gew.-%, vorzugsweise von je 10 bis 60 Gew.-%, bezogen auf die Trägerpolymere.

Schliesslich kann als weiteres Additiv ein Hydrolyse/Kondensations-Katalysator eingemischt werden, insbesondere Dibutyl-dilaureat, Dioctylzinndilaureat und/oder Zinn-II-Octonoat.

Ein in der Praxis ausgeführtes Beispiel wird mit im Handel üblichen Produkten durchgeführt. Ein Homopolymerisat niedriger Dichte aus Ethylen (LDPE), z.B. Escorene LD166BA, dient als Basismaterial für das Trägerpolymer, es wird in einer Menge von 30 bis 90 Gew.-%, bezogen auf das beladene Trägerpolymer, in schüttfähiger Pelletform, chargiert. Als Additive werde folgende Substanzen eingemischt
- 2,5 bis 10,0 % Irganox 1024 der Firma Ciba Spezialitätenchemie, und/oder
- 7,5 bis 20,0 Gew.-% Irganox 1330 ebenfalls der Ciba Spezialitätenchemie,
beide Additive als Antioxidierungsmittel und Prozessstabilisatoren. Weiter wird eine unstabile Silanmischung auf den Träger gegeben, beispielsweise etwa 40 Gew.-% Silikat R der Firma CK Witko.

Die nach dem erfindungsgemässen Verfahren hergestellten, beladenen porösen Trägerpolymere werden zur Additivierung von Massenkunststoffen verwendet, insbesondere zur Herstellung von silanvernetzbaren Kunststoffröhren für beispielsweise Trinkwasser-, Bodenheizungs- und Gasröhren, bei der Folienherstellung und beim Spritz- oder Formguss. Das Trägerpolymere wird mit 3 bis 5 Gew.-%, bezogen auf den Massenkunststoff, zugegeben und beispielsweise mit einem Standardextrusionsprozess weiterverarbeitet. Eine spezifische Verwendung des beladenen porösen Trägerpolymeren dient der Ummantelung von metallischen Drähten, insbesondere aus Kupfer oder Aluminium, sowie von verseilten oder von verrödelten Metalldrahtkonstruktionen. Eine derart vernetzte Isolationsschicht auf beispielsweise einem Kupferdraht erfüllt die Alterungskriterien von 7 Tagen bei 150 C° problemlos.

Bezüglich der Additive werden im Folienbereich vorzugsweise zusätzlich Antistatika, Antischleiermittel, Haftmittel und/oder Kalandrierhilfen eingesetzt, im Spritz- und Formgussbereich zusätzlich Formtrennmittel und/oder Gleitmittel.

Zusammenfassend kann festgehalten werden, dass das erfindungsgemässe Verfahren zur Herstellung und Beladung von porösen Trägerpolymeren, auch Additivmasterbatches genannt, den Verarbeitern von Kunststoffen eine ausserordentlich einfache und kostengünstige Lösung für die Additivierung ihrer Massenkunststoffe bietet, insbesondere für den Folien- und Spritzgussbereich. Das Verfahren erlaubt zudem, reaktive Additive materialschonend, mit geringer Temperatur- und Scherbelastung, in Form von Additivmasterbatches zu überführen.

## Patentansprüche

1. Verfahren zur Herstellung eines schüttfähigen thermoplastischen Trägerpolymeren mit integrierten Additiven für die weitere Verarbeitung, insbesondere zum Vernetzen, eines ebenfalls schüttfähigen thermoplastischen Basispolymeren aus kompatiblem oder gleichem Material,
**dadurch gekennzeichnet, dass**
in einem ersten Schritt gleichzeitig wenigstens eine Aufschäumhilfe und wenigstens ein nur auf die Endprodukte einwirkendes Additiv zum kompakten, porenfreien Trägerpolymeren gegeben werden, diese heterogene Masse unter vorgängigem und/oder gleichzeitigem Mischen geschmolzen und aufgeschäumt wird, in einem zweiten Schritt wenistens ein weiteres, auf die Endprodukte einwirkendes Additiv ohne vorhergehendes Abkühlen, während und/oder nach dem Schmelzen eingemischt, und beim Abkühlen aus der Masse pellet- oder granalienförmige Trägerpolymere mit einer die Additive enthaltenden porösen Struktur gebildet werden.

2. Verfahren nach Anspruch 1, **dadurch gekennzeichnet, dass** als Trägerpolymere eine Mischung aus einem bei Temperaturen (T_{M}) bis 140°C formstabileren Polymeren und einem die Additive in der Festphase des Trägers abspeichernden Polymeren eingesetzt wird.

3. Verfahren nach Anspruch 1 oder 2, **dadurch gekennzeichnet, dass** als Trägerpolymere
- ein Homopolymer aus einem α-Olefin mit 2 - 8 Kohlenstoffatomen oder ein Copolymerisat von zwei entsprechenden α-Olefinen, vorzugsweise Copolymerisate aus Ethylen, auch als Homopolymerisat niedriger (LDPE), linear niedriger (LLDPE), sehr niedriger (VLDPE), ultraniedriger (ULDPE) oder hoher Dichte (HDPE), Propylen, auch als Homopolymerisat, 1-Butylen, 1-Pentylen, 1-Hexylen, 1-Octylen, Isobutylen, 2-Methyl-1-Butylen, 3-Methyl-1-Pentylen, 4-Methyl-1-Pentylen, 2,3-Dimethyl-1-Butylen, 2-Ethyl-1-Butylen, und Mischungen davon, oder
- ein Copolymerisat von Ethylen mit 1-Butylen, 1-Hexylen, 1-Octylen oder 4-Methyl-1-Pentylen, oder
- Polypropylen als Homo- und Copolymere sowie Polypropylen-Modifikationen wie ein Ethylenpropylengummi (EPDM), auch dienmodifiziert (EPR), oder
- ein Ethylenvinylacetat-Copolymerisat (EVAC), ein Ethylenethylacetat-Copolymerisat, ein Ethylenacrylsäurecomplymerisat, ein Ethylen/Ethylacrylat (EEA), ein Ethylen/Butylacrylat (EBA) und Mischungen davon oder mit Copolymeren von Ethylen und 1-Butylen, 1-Hexylen, 1-Octylen oder 4-Methyl-1-Pentylen, oder
- Styrolpolymere wie Styrol-Homopolymere (PS), Styrol-Copolymere, wie ein Styrol-Butadien-Styrol-Copolymerisat (SBS), ein Ethylen/Styrol-Copolymerisat (ESI), ein Stryol-Ethylen-Butylen-Styrol-Copolymerisat (SEBS), ein Styrol/Acrylnitrilcopolymer (SAN), ein Acrylnitril/Polybutadien/Styrolpfropfpolymer (ABS) sowie Mischungen davon mit nicht auf Olefinen basierenden Copolymeren und Polymerblends, oder
- thermoplastische Polykondensate, wie ein Polyamid (PA), ein thermoplastisches Polyamidelastomer (PA-TE), thermoplastische Polyester wie ein Polycarbonat (PC), Polycarbonatblends, ein Polyethylenterephthalat (PET) ein Polybutylenterephthalat (PBT), ein thermoplastisches Polyesterelastomer (TPE), ein Naphthalat-Polyester (PEN, PBN),
eingesetzt werden.

4. Verfahren nach Anspruch 3, **dadurch gekennzeichnet, dass** Trägerpolymere mit flammhemmenden Füllstoffen eingesetzt werden, vorzugsweise mit Aluminiumtrihydrat (ATH) und /oder Magnesiumhydroxid.

5. Verfahren nach einem der Ansprüche 1 bis 4, **dadurch gekennzeichnet, dass** die Aufschäumhilfe mit 0,1 bis 2 Gew.-%, bezogen auf die Trägerpolymere, zugegeben wird, wobei das erzeugte Porenvolumen vorzugsweise bei 30 bis 90%, insbesondere bei 50 bis 70%, liegt.

6. Verfahren nach einem der Ansprüche 1 bis 5, **dadurch gekennzeichnet, dass** die Mischung von Trägerpolymeren und Additiven, eingeschlossen Aufschäumhilfen, zur Erzeugung ellipsoider Poren extrudiert wird, vorzugsweise bis zu einem Verhältnis des längsten zum kürzesten Durchmesser von vorzugsweise wenigstens 2, insbesondere 3 bis 5.

7. Verfahren nach einem der Ansprüche 1 bis 6, **dadurch gekennzeichnet, dass** während dem Einmischen der Aufschäumhilfe wenigstens zeitweise ein inertes Gas zudosiert wird, vorzugsweise Stickstoff.

8. Verfahren nach einem der Ansprüche 1 bis 7, **dadurch gekennzeichnet, dass** die flüssigen und/oder leicht schmelzbaren Additive mit einem Beladungsgrad von 5 bis 80 Gew.-%, vorzugsweise 15 bis 60 Gew.-%, bei einer Temperatur (T_{M}) von 30 bis 140°C, vorzugsweise von 40 bis 90°C, eingemischt werden.

9. Verfahren nach einem der Ansprüche 1 bis 8, **dadurch gekennzeichnet, dass** als Aufschäumhilfen Azodicarbonamide oder Zitronensäure, insbesondere Hydrocerol, und gleichzeitig als weitere, nur auf die Endprodukte einwirkende Additive insbesondere Metalldeaktivatoren, Temperaturstabilisatoren, UV-Stabilisatoren, Stabilisatoren zur Erhöhung der Oxidationsbeständigkeit, Antistatika, Antischleiermittel, Haftmittel, Kalandrierhilfen, Formtrennmittel, Gleitmittel, Schmiermittel, Weichmacher, Duftmittel, Farbpigmente und/ oder Flammschutzmittel eingemischt werden, insbesondere wenigstens eine der Komponenten Fettalkohole, Fettsäuren, Fettsäureester, stickstoffhaltige Fettderivate, Fettsäureamide, Wachssäuren, Wachssäureester, Paraffine, Neutralwachse, Metallseifen; Säureester von Fettalkoholen, Polyolester, Fettalkohol-Fettsäureester, Fettsäureester des Glycerins, neutrale Polyolester von Fettsäuren, Fettalkohol-Dicarbonsäureester, Fettalkohol-Fettsäureester, Stearinsäure, oligomere Fettsäureester, Fettsäuremonoamide, Fettsäuediamide; neutrale Esterwachse, polare Polyethylenwachse, unpolare Polyethylenwachse; stickstoffreie nicht ionogene Verbindungen, Polyethylenglycolester, Polyethylenglycolether, Monoglyceride, Diglyceride, ethxylierte Fettamine; anionenaktive Verbindungen, Alkylsulfonate, Alkylsulfate, Alkylphosphate; kationenaktive Verbindungen, quartäre Ammoniumverbindungen und Organo-Silicone.

10. Verfahren nach einem der Ansprüche 1 bis 9, **dadurch gekennzeichnet, dass** im zweiten Schritt als weitere Additive wenigstens ein mit dem Trägerpolymeren kompatibles, nicht leicht umsetzbares Silan eingemischt wird, mit der Formel
CH₂ = CR'(COO)ₓ (CₙH₂ₙ)_{y}SiR₃
worin R' Wasserstoff oder eine Methylgruppe bedeutet, x und y = 0 oder 1 sind unter der Voraussetzung, dass y 1 ist wenn x 1 ist; n eine ganze Zahl einschliesslich 1 bis 12 bedeutet; jede Gruppe R unabhängig voneinander eine hydrolysierbare organische Gruppe ist, ausgewählt aus Alkoxy, Aryloxy, Aralkyloxy, aliphatischem Acyloxy, Oximo, Alkylamino und Arylamino, oder eine niedere Alkylgruppe mit einschliesslich 1 bis 6 Kohlenstoffatomen, unter der Voraussetzung, dass nicht mehr als eine der drei R-Gruppen ein Alkyl ist.

11. Verfahren nach Anspruch 10, **dadurch gekennzeichnet, dass** ein Silan der Gruppe bestehend aus Vinyltriethoxysilan, Vinyltrimethoxysilan, Vinyltri-iso-butoxysilan eingemischt wird.

12. Verfahren nach einem der Ansprüche 1 bis 11, **dadurch gekennzeichnet, dass** eine Erzeugersubstanz für freie Radikale eingemischt wird, vorzugsweise eine flüssige oder verflüssigbare peroxidhaltige Substanz mit einem Schmelzpunkt unterhalb der Zersetzungstemperatur, insbesondere tert. Butylcumylperoxid (BCUP); 2,5-Dimethyl-2,5-Di(tert. Butylperoxy) Hexan (DHBP); Di(tert. Butyl) Peroxid (DTBP); 2,5-Dimethyl-2,5-Di(tert. Butylperoxy) Hexin (DYBP); Dicumylperoxid (DCUP), 1,1-Di(tert. Butylperoxy) 3,3,5-Trimethyl Cyclohexan (TMCH), auch Mischungen davon, eingesetzt werden, auch mit einem Phlegmatisierungsmittel.

13. Verfahren nach einem der Ansprüche 1 bis 12, **dadurch gekennzeichnet, dass** ein flüssiges oder ein verflüssigbares Coagent eingemischt wird, insbesondere Methacrylate, Acrylate und/oder Allylverbindungen, insbesondere mit Ethylenglycol-Dimethacrylat (EDMA), Trimethylolpropantrimethacrylat (TRIM/TMPT), Butylenglycoldimethacrylat (BDMA), Trimethylolpropantriacrylat (TMPTA), Triallylcyanurat (TAC), Triallylisocyanurat (TAIC), Triallylphosphat (TAP), Triallyltrimellitat (TATM) und/oder Diallylphthalat (DAP).

14. Verfahren nach Anspruch 12 oder 13, **dadurch gekennzeichnet, dass** die Peroxide und/oder Coagentien mit einer Konzentration von je 5 bis 80 Gew.-%, vorzugsweise von je 10 bis 60 Gew.-%, auf den Träger chargiert werden.

15. Verfahren nach einem der Ansprüche 1 bis 14, **dadurch gekennzeichnet, dass** als weiteres Additiv ein Hydrolyse/Kondensations-Katalysator eingemischt wird, insbesondere Dibutyl-dilaureat, Dioctylzinndilaureat und/oder Zinn-II-Octonoat.

16. Verwendung eines nach dem Verfahren nach einem der Ansprüche 1 bis 15 hergestellten, beladenen porösen Trägerpolymeren zur Additivierung von Massenkunststoffen, insbesondere zur Herstellung von silanvernetzbaren Kunststoffröhren, bei der Folienherstellung und beim Spritz- oder Formguss.

17. Verwendung des beladenen porösen Trägerpolymeren nach Anspruch 16, zur Ummantelung von metallischen Drähten, insbesondere aus Kupfer oder Aluminium, sowie von verseilten oder verrödelten Metalldrahtkonstruktionen.

## Claims

1. Method for producing a flowable thermoplastic carrier polymer with integrated additives for further processing, in particular for the cross-linking of a likewise flowable thermoplastic base polymer made of compatible or identical material, **characterised in that** in a first step, at least one foaming agent and at least one additive that only acts on the end products are simultaneously added to the compact, pore-free carrier polymer, this heterogeneous mass is melted and foamed having been previously mixed and/or with simultaneous mixing, in a second step at least one further additive acting on the end products is mixed in during and/or after the melting without previous cooling, and during cooling, pellet-shaped or granular carrier polymers with a porous structure containing the additives are formed from the mass.

2. Method according to claim 1, **characterised in that** a mixture of a polymer which is dimensionally stable at temperatures (T_{M}) up to 140°C, and a polymer storing the additive in the solid phase of the carrier, is used as the carrier polymers.

3. Method according to claim 1 or 2, **characterised in that** used as the carrier polymers are
- a homopolymer of an α-olefin with 2 to 8 carbon atoms or a copolymer of two corresponding α-olefins, preferably copolymers of ethylene, also as a homopolymer of low (LDPE), linear low (LLDPE), very low (VLDPE), ultra low (ULDPE) or high density (HDPE), propylene, also as a homopolymer, 1-butylene, 1-pentylene, 1-hexylene, 1-octylene, isobutylene, 2-methyl-1-butylene, 3-methyl-1-pentylene, 4-methyl-1-pentylene, 2,3-dimethyl-1-butylene, 2-ethyl-1-butylene, and mixtures thereof, or
- a copolymer of ethylene with 1-butylene, 1-hexylene, 1-octylene or 4-methyl-1-pentylene or
- polypropylene as homopolymers and copolymers and polypropylene modifications such as an ethylene propylene rubber (EPDM), also diene-modified (EPR), or
- an ethylene vinyl acetate copolymer (EVAC), an ethylene ethyl acetate copolymer, an ethylene acrylic acid copolymer, an ethylene/ethyl acrylate (EEA), an ethylene/butyl acrylate (EBA) and mixtures thereof or with copolymers of ethylene and 1-butylene, 1-hexylene, 1-octylene or 4-methyl-1-pentylene, or
- styrene polymers such as styrene homopolymers (PS), styrene copolymers such as a styrene-butadiene-styrene-copolymer (SBS), an ethylene/styrene-copolymer (ESI), a styrene-ethylene-butylene-styrene-copolymer (SEBS), a styrene/acrylonitrile copolymer (SAN), an acrylonitrile/polybutadiene/styrene graft polymer (ABS) and mixtures thereof with copolymers not based on olefins, and polymer blends, or
- thermoplastic polycondensates, such as a polyamide (PA), a thermoplastic polyamide elastomer (PA-TE), thermoplastic polyesters such as a polycarbonate (PC), polycarbonate blends, a polyethylene terephthalate (PET), a polybutylene terephthalate (PBT), a thermoplastic polyester elastomer (TPE), a naphthalate-polyester (PEN, PBN).

4. Method according to claim 3, **characterised in that** carrier polymers are used with flame-inhibiting fillers, preferably with aluminium trihydrate (ATH) and/or magnesium hydroxide.

5. Method according to any one of claims 1 to 4, **characterised in that** the foaming agent is added at 0.1 to 2 % by weight, based on the carrier polymers, the pore volume generated preferably being 30 to 90%, in particular 50 to 70%.

6. Method according to any one of claims 1 to 5, **characterised in that** the mixture of carrier polymers and additives, including foaming agents, is extruded to generate ellipsoidal pores, preferably until there is a ratio of the longest to the shortest diameter of preferably at least 2, in particular 3 to 5.

7. Method according to any one of claims 1 to 6, **characterised in that** during the mixing in of the foaming agent, an inert gas, preferably nitrogen, is added at least intermittently.

8. Method according to any one of claims 1 to 7, **characterised in that** the liquid and/or slightly meltable additives are mixed in with a charging degree of 5 to 80 % by weight, preferably 15 to 60 % by weight, at a temperature (T_{M}) of 30 to 140°C, preferably of 40 to 90°C.

9. Method according to any one of claims 1 to 8, **characterised in that** azodicarbonamides or citric acids, in particular hydrocerol, are mixed in as foaming agents, and simultaneously, as further additives that only act on the end products, in particular metal deactivators, temperature stabilisers, UV stabilisers, stabilisers for increasing the oxidation resistance, antistatics, anti-fogging agents, adhesives, calendering agents, releasing agents, slip additives, lubricants, plasticisers, scents, dye pigments and/or flame protection agents are mixed in, in particular at least one of the components fatty alcohols, fatty acids, fatty acid esters, nitrogen-containing fat derivatives, fatty acid amides, wax acids, wax acid esters, paraffins, neutral waxes, metallic soaps; acid esters of fatty alcohols, polyol esters, fatty alcohol fatty-acid esters, fatty acid esters of glycerol, neutral polyol esters of fatty acids, fatty alcohol-dicarboxylic acid esters, fatty alcohol-fatty acid esters, stearic acids, oligomeric fatty acid esters, fatty acid monoamides, fatty acid diamides; neutral ester waxes, polar polyethylene waxes, non-polar polyethylene waxes; nitrogen-free non-ionogenic compounds, polyethylene glycol esters, polyethylene glycol ethers, monoglycerides, diglycerides, ethoxylated fatty amines; anion-active compounds, alkyl sulphonates, alkyl sulphates, alkyl phosphates; cation-active compounds, quaternary ammonium compounds and organo-silicones.

10. Method according to any one of claims 1 to 9, **characterised in that** in the second step, as further additives, at least one silane that is compatible with the carrier polymer and not easily converted is mixed in, with the formula
CH₂ = CR'(COO)ₓ(CₙH₂ₙ)_{y}SiR₃
wherein R' signifies hydrogen or a methyl group, x and y = 0 or 1 with the prerequisite that y is 1 when x is 1; n signifies an integer including 1 to 12; each group R is, independently from one another, a hydrolysable organic group, selected from alkoxy, aryloxy, aralkyloxy, aliphatic acyloxy, oximo, alkylamino and arylamino, or a low alkyl group having 1 to 6 carbon atoms, with the prerequisite, that not more than one of the three R groups is an alkyl.

11. Method according to claim 10, **characterised in that** a silane of the group consisting of vinyltriethoxysilane, vinyltrimethoxysilane, vinyltri-iso-butoxysilane is mixed in.

12. Method according to any one of claims 1 to 11, **characterised in that** a generator substance for free radicals is mixed in, preferably a liquid or liquefiable peroxide-containing substance with a melting point below the decomposition temperature in particular tert.butylcumyl peroxide (BCUP); 2,5-dimethyl-2,5-di(tert. butylperoxy) hexane (DHBP); di(tert. butyl) peroxide (DTBP); 2,5-dimethyl-2,5-di(tert. butylperoxy) hexyne (DYBP); dicumyl peroxide (DCUP), 1,1-di(tert. butyl peroxy) 3,3,5-trimethyl cyclohexane (TMCH), also mixtures thereof are used, also with a phlegmatising agent.

13. Method according to any one of claims 1 to 12, **characterised in that** a liquid or a liquefiable coagent is mixed in, in particular methacrylates, acrylates and/or allyl compounds, in particular with ethylene glycol dimethacrylate (EDMA), trimethylolpropantrimethacrylate (TRIM/TMPT), butylene glycol dimethacrylate (BDMA), trimethylolpropantriacrylate (TMPTA), triallyl cyanurate (TAC), triallyl isocyanurate (TAlC), triallyl phosphate (TAP), triallyl trimellitate (TATM) and/or diallyl phthalate (DAP).

14. Method according to claim 12 or 13, **characterised in that** the peroxides and/or coagents are charged at a concentration of 5 to 80 % by weight, in each case, preferably of 10 to 60 % by weight in each case, on the carrier.

15. Method according to any one of claims 1 to 14, **characterised in that** a hydrolysis/condensation catalyst is mixed in as a further additive, in particular dibutyl dilaureate, dioctyl tin dilaureate and/or tin-II-octonoate.

16. Use of a charged porous carrier polymer produced by the method according to any one of claims 1 to 15, for the additivation of mass plastics materials, in particular for the production of silane cross-linkable plastics material pipes, during film production and during injection moulding or mould casting.

17. Use of the charged porous carrier polymer according to claim 16, for the sheathing of metal wires, in particular made of copper or aluminium, as well a of stranded or tied metal wire constructions.

## Revendications

1. Procédé de fabrication d'un polymère porteur thermoplastique, apte à l'écoulement et incluant des additifs intégrés pour le traitement ultérieur, en particulier pour la réticulation d'un polymère de base, lui aussi thermoplastique et apte à l'écoulement, en matière compatible ou identique,
**caractérisé en ce que**
dans une première étape, au moins un adjuvant de moussage et au moins un additif n'agissant que sur les produits finis sont ajoutés au polymère porteur compact, exempt de pores, cette masse hétérogène préalablement ou simultanément mélangée est fondue et moussée, dans une deuxième étape, au moins un autre additif agissant sur les produits finis est introduit par mélange sans refroidissement préalable, pendant et/ou après la fusion, et des polymères porteurs sous forme de pellets ou de granules, à structure poreuse contenant des additifs, sont formés à partir de cette masse après refroidissement.

2. Procédé selon la revendication 1, **caractérisé en ce que** le polymère porteur introduit est un mélange constitué d'un polymère de forme stable à des températures (T_{M}) pouvant s'élever jusqu'à 140°C, et d'un polymère accumulant les additifs dans la phase solide du porteur.

3. Procédé selon la revendication 1 ou 2, **caractérisé par** l'introduction en tant que polymère porteur, de:
- un homopolymère formé d'une α-oléfine à deux à huit atomes de carbone ou un copolymère de deux polyoléfines α correspondantes, de préférence des copolymères d'éthylène, et aussi, comme homopolymère, du polypropylène à faible densité (LDPE), à faible densité linéaire (LLDPE), à densité très faible (VLDPE), à densité ultrafaible (ULDPE), ou à haute densité (HDPE), et aussi, comme homopolymère, du 1-butylène, du 1-pentylène, du 1-hexylène, du 1-octylène, de l'isobutylène, du 2-méthyl-1-butylène, du 3-méthyl-1-pentylène, du 4-méthyl-1-pentylène, du 2,3-diméthyl-1-butylène, du 2-éthyl-1-butylène, et des mélanges de ceux-ci, ou
- un copolymère d'éthylène avec du 1-butylène, du 1-hexylène, du 1-octylène ou du 4-méthyl-1-pentylène, ou
- du polypropylène comme homopolymère et copolymère ainsi que des modifications du polypropylène comme du caoutchouc d'éthylène propylène (EPDM), également modifié diène (EPR), ou
- un copolymère d'éthylène et d'acétate de vinyle (EVAC), un copolymère d'éthylène et d'acétate d'éthyle, un copolymère d'éthylène et d'acide acrylique, un éthylène/acrylate d'éthyle (EEA), un éthylène/acrylate de butyle (EBA) et des mélanges de ceux-ci ou avec des copolymères d'éthylène et de 1-butylène, de 1-hexylène, de 1-octylène ou de 4-méthyl-1-pentylène, ou
- des polymères de styrène comme des homopolymères de styrène (PS), des copolymères de styrène comme un copolymère de styrène-butadiène-styrène (SBS), un copolymère d'éthylène/styrène (ESI), un copolymère de styrène-éthylène-butylène-styrène (SEBS), un copolymère styrène/acrylonitrile (SAN), un polymère greffé acrylonitrile/polybutadiène/styrène (ABS) ainsi que des mélanges de ceux-ci avec des copolymères et des mélanges de polymères qui ne sont pas basés sur des oléfines, ou
- des polycondensats thermoplastiques, comme un polyamide (PA), un polyamidélastomère thermoplastique (PA-TE), un polyester thermoplastique comme un polycarbonate (PC), des mélanges de polycarbonates, un polytéréphtalate d'éthylène (PET), un polytéréphtalate de butylène (PBT), un élastomère de polyester thermoplastique (TPE), un naphtalate de polyester (PEN, PBN).

4. Procédé selon la revendication 3, **caractérisé par** l'introduction de polymères porteurs à charge ignifugeante, de préférence à teneur en trihydrate d'aluminium (ATH) et/ou en hydroxyde de magnésium.

5. Procédé selon l'une quelconque des revendications précédentes, **caractérisé en ce que** la teneur ajoutée en adjuvant de moussage est de 0,1 à 2% en poids du polymère porteur, le volume de pores engendré étant de préférence de 30 à 90%, en particulier de 50 à 70%.

6. Procédé selon l'une quelconque des revendications précédentes, **caractérisé en ce que** le mélange de polymères porteurs et d'additifs, y compris les adjuvants de moussage, est extrudé pour générer des pores ellipsoïdaux, dans lesquels le rapport entre le grand axe et le petit axe est de préférence d'au moins 2, de préférence de 3 à 5.

7. Procédé selon l'une quelconque des revendications précédentes, **caractérisé en ce qu'**un gaz inerte, de préférence de l'azote, est ajouté au moins temporairement pendant l'introduction de l'adjuvant de moussage par mélange.

8. Procédé selon l'une quelconque des revendications précédentes, **caractérisé en ce que** les additifs liquides ou facilement fusibles sont ajoutés à une teneur de 5 à 80% en poids, de préférence de 15 à 60% en poids, à une température (T_{M}) de 30 à 140°C, de préférence de 40 à 90°C.

9. Procédé selon l'une quelconque des revendications précédentes, **caractérisé en ce que** les additifs de moussage introduits par mélange sont des azodicarbonamides ou de l'acide citrique, en particulier de l'hydrocérol, et les autres additifs introduits simultanément et n'agissant que sur les produits finis sont en particulier des désactivants métalliques, des stabilisants en température, des stabilisants aux UV, des stabilisants élevant la résistance à l'oxydation, des agents antistatiques, des agents anti-turbidité, des adhésifs, des adjuvants de calandrage, des agents de démoulage, des lubrifiants internes, des agents lubrifiants, des plastifiants, des agents aromatiques, des pigments colorés et/ou des agents pare-flammes, en particulier au moins l'un des composants suivants: alcools gras, acides gras, esters d'acides gras, dérivés gras à teneur en azote, amides d'acides gras, acides de cires, esters acides de cires, paraffines, cires neutres, savons métalliques; esters acides d'alcools gras, polyolesters, esters d'alcools gras et d'acides gras, esters d'acides gras et de la glycérine, polyolesters neutres d'acides gras, esters d'acide bicarbonique et d'alcools gras, esters d'acides gras et d'alcools gras, acide stéarique, oligomères d'esters d'acides gras, monoamides d'acides gras, diamides d'acides gras; cires d'esters neutres, cires de polyéthylène polaires, cires de polyéthylène non polaires; combinaisons non ionogènes exemptes d'azote, esters de polyéthylène glycols, éthers de polyéthylène glycols, monoglycérides, diglycérides, amines grasses éthoxylées; combinaisons anioniquement actives, alkylsufonates, alkylsulfates, alkyl-phosphates; combinaisons cationiquement actives, combinaisons quaternaires d'ammonium, et organo-silicones.

10. Procédé selon l'une quelconque des revendications précédentes, **caractérisé par** l'introduction par mélange, comme autres additifs dans la deuxième étape, d'au moins un silane compatible avec le polymère porteur et non déplaçable facilement, de la formule:
CH₂ = CR'(COO)ₓ(CₙH₂ₙ)_{y}SᵢR₃
Où R' est l'hydrogène ou un groupe méthyle, x et y = 0 ou 1 sous condition que y égale 1 lorsque x égale 1, n est un nombre entier compris entre 1 et 12 inclus, chaque groupe R est, indépendamment des autres, un groupe organique hydrolysable, choisi parmi les groupes alkoxy, aryloxy, aralkyloxy, acyloxy aliphatique, oximo, alkylamino et arylamino, ou un groupe alkyle inférieur à 1 à 6, inclus, atomes de carbone, sous condition qu'au plus l'un des trois groupes R est un alkyle.

11. Procédé selon la revendication 10, **caractérisé par** l'introduction, par mélange, d'un silane du groupe constitué par le vinyltriéthoxy-silane, le vinyltriméthoxysilane, le vinyltri-iso-butoxysilane.

12. Procédé selon l'une quelconque des revendications précédentes, **caractérisé par** l'introduction d'une substance génératrice de radicaux libres, de préférence une substance liquide ou liquéfiable à teneur en peroxydes, à point de fusion inférieur à la température de décomposition, en particulier du tert. butylcumylperoxyde (BCUP); du 2,5-diméthyl-2,5-di(tert. butylperoxy) hexane (DHBP); du di(tert. butyl) peroxyde (DTBP); de la 2,5-diméthyl-2,5-di(tert. butyl-peroxy) hexine (DYBP); du dicumylperoxyde (DCUP); du 1,1-di(tert. butylperoxy) 3,3,5-triméthyl cyclohexane (TMCH), ainsi que des mélanges de ceux-ci, éventuellement avec un agent de phlegmatisation.

13. Procédé selon l'une quelconque des revendications précédentes, **caractérisé par** l'introduction, par mélange, d'un coagent liquide ou liquéfiable, en particulier des méthacrylates, des acrylates et ou des combinaisons allyliques, en particulier avec du diméthacrylate d'éthylène glycol (EDMA), du triméthacrylate de triméthylolpropane (TRIM/TMPT), du diméthacrylate de butylène glycol (BDMA), du triacrylate de triméthylolpropane (TMPTA), du cyanurate de triallyle (TAC), de l'isocyanurate de triallyle (TAIC), du phosphate de triallyle (TAP), du trimellitate de triallyle (TATM) et/ou du phtalate de diallyle (DAP).

14. Procédé selon la revendication 12 ou 13, **caractérisé en ce que** les peroxydes et/ou les co-agents sont ajoutés à une concentration de 5 à 80% en poids respectivement, de préférence 10 à 60% en poids respectivement, du porteur.

15. Procédé selon l'une quelconque des revendications précédentes, **caractérisé par** l'introduction par mélange, comme autre additif, d'un catalyseur d'hydrolyse/de condensation, en particulier du dilauréate de dibutyle, du dilauréate de dioctyle-étain et/ou du II-octonoate d'étain.

16. Utilisation d'un polymère porteur poreux chargé, conforme au procédé de l'une quelconque des revendications précédentes, pour l'introduction d'additifs pour des matières plastiques de production en grande série, en particulier pour la production de tubes en matière plastique réticulables au silane, dans la fabrication de feuilles, et dans le moulage par injection ou à modèle perdu.

17. Utilisation d'un polymère porteur poreux chargé conforme à la revendication 16, pour envelopper des fils métalliques, de cuivre et d'aluminium en particulier, ainsi que des structures de fils métalliques toronnées, ou bottelées et cerclées à intervalles réguliers.
